Europäisches Patentamt

European Patent Office

Office européen des brevets

(11) Veröffentlichungsnummer: **0 091 969**
**B1**

(12) **EUROPÄISCHE PATENTSCHRIFT**

(45) Veröffentlichungstag der Patentschrift:
**06.11.85**

(21) Anmeldenummer: **82102202.7**

(22) Anmeldetag: **18.03.82**

(51) Int. Cl.⁴: **B 64 C 27/32**, B 64 C 27/48

(54) **Rotor, insbesondere für ein Drehflügelflugzeug.**

(43) Veröffentlichungstag der Anmeldung:
**26.10.83 Patentblatt 83/43**

(45) Bekanntmachung des Hinweises auf die Patenterteilung:
**06.11.85 Patentblatt 85/45**

(84) Benannte Vertragsstaaten:
**DE FR GB IT**

(56) Entgegenhaltungen:
**FR - A - 927 566**
**US - A - 2 372 416**
**US - A - 2 919 753**
**US - A - 3 007 654**
**US - A - 3 126 967**

(73) Patentinhaber: **Messerschmitt-Bölkow-Blohm Gesellschaft mit beschränkter Haftung, Robert-Koch-Strasse, D-8012 Ottobrunn (DE)**

(72) Erfinder: **Schwarz, Alois, Dipl.-Ing., Ahornweg 21, D-8011 Putzbrunn (DE)**
Erfinder: **Mautz, Karlheinz, Brennerstrasse 13, D-8012 Ottobrunn (DE)**

ACTORUM AG

## Beschreibung

Die Erfindung betrifft einen Rotor gemäss dem Oberbegriff des Patentanspruchs 1.

Ein derartiger beispielsweise durch die DE-OS 3006088 bekannter Rotor hat u.a. den Vorteil, dass für eine Blattverschwenkung in eine Faltlage die Längsachse der druckbelastbaren Lagerung als Blattschwenkachse nutzbar ist. Im übrigen besteht wie bei dem durch die DE-PS 2658828 bekannten Rotor die Möglichkeit einer Ausgestaltung der Rotornabe als ein Schutzgehäuse u.a. für die Blatteinstellwinkelsteuerung, wobei die von einer Taumelscheibe betätigten, umlaufenden Steuerstangen bei der jeweils zugeordneten Blattwurzel beispielsweise über einen Blattsteuerhebel am nabenseitigen Ende des Lagerzapfens angreifen können. Bei solcher kinematisch einfachen Blatteinstellwinkelsteuerung bestehen allerdings ausserhalb der Rotornabe keine Eingriffsmöglichkeiten für das sogenannte Tracking, d.h. die Spurlaufausrichtung der Rotorblätter nach der Montage an der Rotornabe: Bekanntlich müssen sämtliche Rotorblätter so feineingestellt werden, dass sie im Betrieb bei gleichem kollektiven Blatteinstellwinkel (ohne zyklische Blattverstellung) in ein und derselben Ebene umlaufen (Spurlauf). Eine derartige Blattfeineinstellung um genau gleiche Winkelgrade oder gar -minuten der einzelnen Rotorblätter wird erfahrungsgemäss bei einem Rotor des öfteren nötig, u.a. meist auch nach Lagerwechseln im Blattsteuergetriebe. Deshalb besteht die Forderung nach einer einfachen, jederzeit leicht zugänglichen Einrichtung für die Blattspurlaufausrichtung, was beispielsweise durch Längenverstellbarkeit der Steuerstangen, sofern diese in der Rotornabe untergebracht sind, nicht ohne weiteres sichergestellt ist.

Der Erfindung liegt daher die Aufgabe zugrunde, bei einem Rotor der eingangs genannten Art, mit in der Rotornabe untergebrachtem Blattsteuergetriebe, eine besonders leicht zu handhabende Feineinstellungsmöglichkeit für die Spurlaufausrichtung des einzelnen Rotorblattes zu schaffen.

Diese Aufgabe ist gemäss dem Kennzeichen des Patentanspruchs 1 gelöst in der Erkenntnis, dass der üblicherweise massiv ausgebildete Lagerzapfen zur Funktionserfüllung ebensogut eine Hülse sein kann und als solche einen zur Blattwinkelachse koaxialen Durchgang in der Rotornabe zwischen der hierin dem betreffenden Rotorblatt zuzuordnenden Steuerstange einerseits und der Blattwurzel andererseits eröffnet mit der Möglichkeit zu der vorgeschlagenen Kopplung derselben über eine Steuerwelle unter Zwischenschaltung eines zusätzlichen Blattsteuerelementes «Hebel» an einem im Grunde einzig geeigneten Ort des Rotors für die angestrebte Blattfeineinstellung, nämlich am Ort des Wurzelbeschlags. Die Blattfeineinstellung ist demzufolge bereits durch Feststellungsmittel für den Hebel in einfachster Weise realisierbar. Das verdeutlichen die in den Unteransprüchen gekennzeichneten, u.a. wegen geringer Störanfälligkeit bevorzugten Ausgestaltungen der Erfindung.

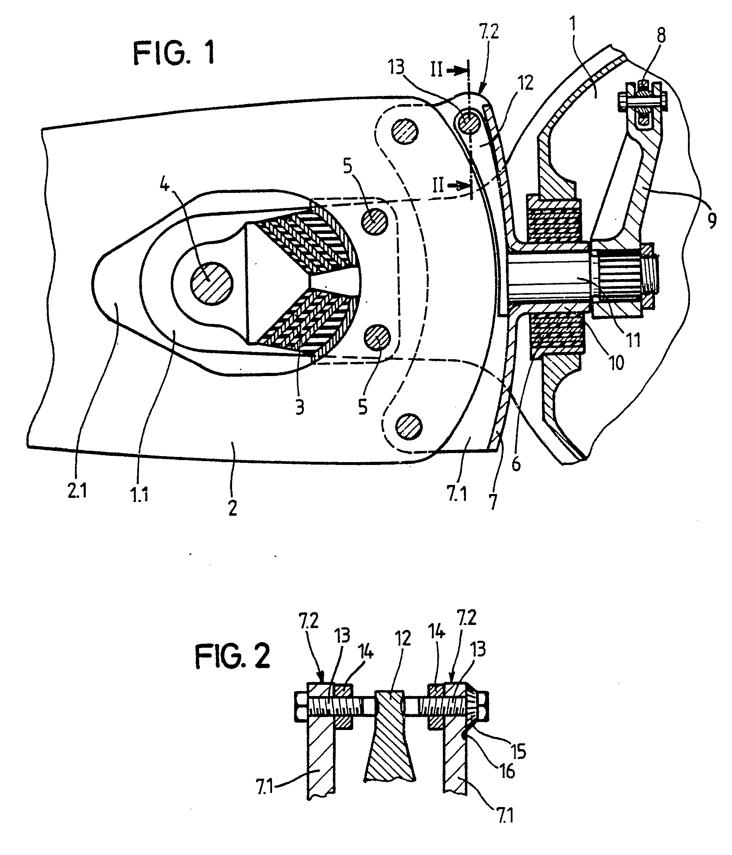

Die Erfindung wird nachfolgend anhand eines Ausführungsbeispiels weiter erläutert. Hierzu zeigt die Zeichnung von einem Rotor eines Drehflügelflugzeugs in Fig. 1 in der Draufsicht, teils geschnitten, einen Ausschnitt der Rotornabe mit einem Abschnitt eines Rotorblattes und den zugehörigen Steuerelementen für Blatteinstellwinkelverstellung,

Fig. 2 einen Schnitt gemäss Schnittlinie II-II der Fig. 1.

Die dargestellte Rotornabe 1 ist (wie diejenige des durch die DE-C- 2658828 bekannten Rotors) als ein Gehäuse für Blattsteuerelemente gestaltet und (wie bei dem durch die DE-A- 3006088 bekannten Rotor) für den Anschluss des einzelnen Rotorblattes bzw. dessen Blattwurzel 2 mit je einem radial auswärts gerichteten Rotornabenarm 1.1 in Form einer Gabel versehen. Die Verbindung des Rotornabenarmes 1.1 mit der Blattwurzel 2 ist über ein in einer entsprechenden Ausnehmung 2.1 derselben angeordnetes Axial-Radial-Elastomerlager 3 hergestellt, das einerseits über einen die Blattwinkelachse kreuzenden Bolzen 4 am Rotornabenarm 1.1 und andererseits über zwei zur Blattwinkelachse symmetrisch angeordnete Bolzen 5 an der Blattwurzel 2 befestigt ist. Dieses Elastomerlager 3 erfüllt damit die Funktion einer die Blattfliehkräfte aufnehmenden, also druckbelastbaren und aber hierbei Blattwinkelbewegungen, also die Blatteinstellwinkelverstellung zulassenden Verbindung. Die Blattwurzel 2 ist schliesslich über das Axial-Radial-Elastomerlager 3 hinaus an der Wurzel des Rotornabenarmes 1.1 in einem Radial-Elastomerlager 6 abgestützt, wobei die Verbindung über einen entsprechenden Blattwurzelbeschlag 7 hergestellt ist. Über beide Elastomerlager 3, 6 werden die Momente aus der Blattschlag- und Blattschwenkbiegung auf die Rotornabe 1 abgesetzt.

Um bei solchem Blattanschluss den Blatteinstellwinkel im Wege einer Drehwinkelbewegung des Blattwurzelbeschlages 7 mittels eines von einer üblichen Steuerstange 8 betätigten Blattsteuerhabels 9 verstellen zu können zusätzlich mit der Möglichkeit der Spurlaufausrichtung (sog. Tracking) des Rotorblattes von einer leicht zugänglichen Stelle ausserhalb der Rotornabe 1, ist ein blattwurzelseitig koaxial zur Blattwinkelachse angeordneter, in dem Radial-Elastomerlager 6 sitzender Lagerzapfen als ein hülsenförmiger Fortsatz 10 des Blattwurzelbeschlages 7 die Lagerung für eine Steuerwelle 11. Hieran ist einerseits der Blattsteuerhebel 9 angeschlossen, beispielsweise mittels einer Kerbverzahnung. Andererseits sitzt drehfest an der Steuerwelle 11 ein in dem Blattwurzelbeschlag 7 radial auswärts sich erstreckender Hebel 12, welcher daran normalerweise festgestellt ist. Folglich führt im Rotorbetrieb eine Steuerbewegung der Steuerstange 8 über den Blattsteuerhebel 9 zu einer Drehwinkelbewegung der Steuerwelle 11 mit zwangsläufiger Verschwenkung des blattwurzelbeschlagseitig festgestellten Hebels 12, welcher dann eine Drehwinkelbewegung des Blattwurzelbeschlages 7 und damit der Blattwurzel 2, also des Rotorblattes bewirkt. Für die Spurlaufausrichtung (sog. Tracking) ist der Blattwurzelbeschlag 7 gegenüber dem Hebel 12 verstellbar, was durch eine entsprechende Ausgestaltung der Hebel-Feststellungsmittel erreicht ist. Wie Fig. 2 zeigt, ist das freie Ende des Hebels 12 zwischen zwei einander gegenüberstehenden Stellschrauben 13 festgeklemmt, die in an dem Blattwurzelbeschlag 7 bzw. an dessen Gabelschenkeln 7.1 (vgl. Fig. 1) angeformten Ansätzen 7.2 eingeschraubt und darin durch Kontermuttern 14 festgestellt sind. Einer der Schraubenköpfe ist mit einer Winkelskala 15, beispielsweise mit Minuteneinteilung, für eine Messmarke 16 seitens des betreffenden Ansatzes 7.2 des Gabelschenkels 7.1 bzw. Blattwurzelbeschlags 7 versehen, so dass nach dem Lösen der (im Rotorbetrieb angezogenen) Kontermuttern 14 durch entsprechendes Verdrehen der beiden dann gegen den feststehenden Hebel 12 sich abstützenden Stellschrauben 13 unmittelbar eine Drehwinkelbewegung des Blattwurzelbeschlages 7 im jeweils gewünschten Winkelmass erreicht wird. Die Handhabung dieser Feineinstellung des Blattwinkels ist somit denkbar einfach. Es versteht sich, dass hierbei das Verstellen des Hebels 12 über die Steuerwelle 11 durch den Blattsteuerhebel 9 bzw. die an einer nicht dargestellten Taumelscheibe sich abstützende Steuerstange 8 sichergestellt ist.

## Patentansprüche

1. Rotor, insbesondere für ein Drehflügelflugzeug, mit einem Anschluss des einzelnen Rotorblattes an der Rotornabe (1) über einen in Form einer Gabel radial auswärts gerichteten Rotornabenarm (1.1) unter Zwischenschaltung einer in Blattlängsrichtung druckbelastbaren, zugleich die Blatteinstellwinkelbewegungen zulassenden Lagerung (3), wobei darüber hinaus die mit einer Steuerstange (8) gekoppelte Blattwurzel (2) sich mittels eines zur Blattwinkelachse koaxialen Lagerzapfens (10) in einem Radiallager (6) der Rotornabe abstützt, dadurch gekennzeichnet, dass der Lagerzapfen als ein hülsenförmiger Fortsatz (10) eines Blattwurzelbeschlages (7) die Lagerung für eine in der Rotornabe (1) mit der Steuerstange (8) gekoppelte Blattsteuerwelle (11) ist, mit welcher andererseits ein in dem Blattwurzelbeschlag (7) hinsichtlich der Blattsteuerwellenachse radial auswärts sich erstreckender, hieran in Blattsteuerwellendrehrichtung justierbar festgestellter Hebel (12) drehfest verbunden ist.

2. Rotor nach Anspruch 1, dadurch gekennzeichnet, dass das freie Ende des Hebels (12) zwischen zwei einander gegenüberstehenden Stellschrauben (13) festgeklemmt ist, die in den Blattwurzelbeschlag (7) eingeschraubt sind.

3. Rotor nach Anspruch 2, dadurch gekennzeichnet, dass die einzelne Stellschraube (13) in dem Blattwurzelbeschlag (7) feststellbar ist.

4. Rotor nach Anspruch 2, dadurch gekennzeichnet, dass wenigstens einer der Schraubenköpfe eine Winkelskala (15) für eine Messmarke (16) an dem Blattwurzelbeschlag (7) aufweist.

## Claims

1. A rotor, especially for a rotary-wing aircraft, having a connection of the individual rotor blade to the rotor hub (1) by way of a rotor hub arm (1.1), directed radially outwards in the shape of a fork, with the interpolation of a mounting (3) which can be loaded compressively in the longitudinal direction of the blade and which at the same time permits the pitch angle movements of the blade, and in which additionally blade root (2) coupled with a control rod (8) is supported by means of a pivot pin (10), coaxial with the blade angle axis, in radial bearing (6) of the rotor hub, characterized in that the pivot pin, as a sleeveshaped extension (10) of a blade root fitting (7), is the mounting for a blade control shaft (11) which is coupled, in the rotor hub (1), with the control rod (8) and to which, on the other hand, there is connected, in a torsionally-fast manner, a lever (12) which extends radially outwards, in the blade root fitting (7), relative to the blade control shaft axis and which is fixable thereon so as to be adjustable in the direction of rotation of the blade control shaft.

2. A rotor according to claim 1, characterized in that the free end of the lever (12) is firmly clamped between two adjusting screws (13) which stand opposite one another and which are screwed into the blade root fitting (7).

3. A rotor according to claim 2, characterized in that the individual adjusting screw (13) is securable in the blade root fitting (7).

4. A rotor according to claim 2, characterized in that at least one of the screw heads has an angle scale (15) for a measuring mark (16) on the blade root fitting (7).

## Revendications

1. Rotor, en particulier pour un appareil à voilure tournante, comprenant un raccordement des différentes pales au moyeu (1) du rotor par l'intermédiaire d'un bras (1.1) dirigé radialement vers l'extérieur sous la forme d'une chape avec intercalation d'un palier (3) pouvant travailler en compression dans le sens longitudinal de la pale et autorisant en même temps les déplacements angulaires de celle-ci, le pied (2) de la pale, accouplé à une biellette de commande (8), prenant en outre appui, au moyen d'un tourillon (10) coaxial à l'axe de variation du pas des pales, dans un palier radial (5) du moyeu du rotor, caractérisé par le fait que le tourillon, en tant que prolongement (10) en forme de douille d'une ferrure (7) du pied de pale, constitue le logement pour un arbre de commande de pale (11) qui, dans le moyeu (1), est accouplé à la biellette (8) et auquel est d'autre part relié, fixé en rotation, un levier (12) s'étendant radialement vers l'extérieur dans la ferrure 7 du pied de pale par rapport à l'axe de l'arbre de commande de pale, et fixé à celle-ci de façon ajustable dans le sens de la rotation de l'arbre de commande des pales.

2. Rotor selon la revendication 1, caractérisé par le fait que l'extrémité libre du levier (12) est serrée entre deux vis de réglage (13) mutuellement opposées qui sont vissées dans la ferrure (7) du pied de pale.

3. Rotor selon la revendication 2, caractérisé par le fait que les vis de réglage individuelles (13) peuvent être bloquées dans la ferrure (7) du pied de pale.

4. Rotor selon la revendication 2, caractérisé par le fait qu'au moins l'une des têtes de vis comprend un cadran de mesure d'angle (15) pour un trait de repère (16) placé sur la ferrure (7) du pied de pale.

4

0 091 969

FIG. 1

FIG. 2

5